Europäisches Patentamt

European Patent Office

Office européen des brevets

(11) Veröffentlichungsnummer: **0 492 281 A2**

# EUROPÄISCHE PATENTANMELDUNG

(21) Anmeldenummer: **91121237.1**

(51) Int. Cl.⁵: **B60N 2/32**

(22) Anmeldetag: **11.12.91**

(30) Priorität: **27.12.90 DE 9017488 U**

(43) Veröffentlichungstag der Anmeldung:
**01.07.92 Patentblatt 92/27**

(84) Benannte Vertragsstaaten:
**DE FR GB IT**

(71) Anmelder: **Zäh, Hans-Jürgen**
**Ulmer Strasse 32**
**W-7916 Nersingen(DE)**

(72) Erfinder: **Zäh, Hans-Jürgen**
**Ulmer Strasse 32**
**W-7916 Nersingen(DE)**

(74) Vertreter: **Pfister, Helmut, Dipl.-Ing.**
**Buxacher Strasse 9**
**W-8940 Memmingen/Bayern(DE)**

(54) **Fahrzeugsitz.**

(57) Die Rückenlehne (4) des Sitzes (3) ist nach vorne umklappbar. An ihrer Rückseite besitzt die Rückenlehne eine Tischplatte (1), die im umgeklappten Zustand nach rückwärts verlängerbar ist. Diese Tischplatte bildet zusammen mit dem Rücksitz (2) hinter diesem Sitz (3) eine Schreibtisch-Arbeitsplatz-Kombination, die es erlaubt, Schreibarbeiten, ähnlich wie in einem Büro, auszuführen. Die Tischplatte (1) kann nach rückwärts verschiebbar sein oder auch ausziehbar oder umklappbar.

EP 0 492 281 A2

Die Erfindung betrifft einen Sitz für Kraftfahrzeuge mit einem Sitzteil und einer Rückenlehne, wobei die Rückenlehne nach vorne schwenkbar und an ihrer Rückseite mit einer als Tischplatte dienenden Oberfläche ausgestattet ist.

In dem DE-Gbm 67 51 026 ist ein derartiger Sitz für ein Kraftfahrzeug beschrieben. Der Sitz ist dabei als Mittelsitz in einem Lastfahrzeug vorgesehen, und zwar zusätzlich zwischen den normalen seitlichen Sitzen. Die Tischplatte dient dabei den Personen auf den seitlichen Sitzen.

In der DE-OS 37 05 059 ist ein anderer Fahrzeugsitz beschrieben. Die Rückenlehne ist dabei mit zusätzlichen Wandteilen versehen, mit denen es möglich ist, eine von außen nicht einsehbare verdeckte Ablage auf der Rückfläche der Rückenlehne zu bilden, wenn diese umgeklappt ist.

Es ist ferner bekannt, beispielsweise aus der DE-OS 36 03 891, die Rückenlehne umzuklappen, um auf diese Weise die Ladefläche des Fahrzeuges zu vergrößern oder eine besondere Ladefläche zu gewinnen.

Personenfahrzeuge, die insbesondere als Geschäftsfahrzeuge benutzt werden, sind oft nur teilweise besetzt. Obwohl somit der Innenraum eines derartigen Fahrzeuges nur unvollständig ausgenützt ist, ist es schwierig, im Fahrzeug Schreibarbeiten oder ähnliche Tätigkeiten zu erledigen, weil die hierfür erforderliche Schreibtischfläche fehlt. Die vorstehend beschriebenen tischartigen Rückenlehnen sind für diesen Zweck nicht geeignet.

Es ist Aufgabe der Erfindung, einen Sitz für Kraftfahrzeuge vorzuschlagen, bei dem es möglich ist, im Bedarfsfall eine Schreibtischfläche in solcher Qualität zur Verfügung zu haben, daß auf dieser Schreibtischfläche tatsächlich, ähnlich wie in einem Büro, gearbeitet werden kann.

Zur Lösung dieser Aufgabe geht die Erfindung aus von einem Sitz der eingangs beschriebenen Gattung. Erfindungsgemäß wird vorgeschlagen, daß die Tischplatte in umgeklappter Stellung nach rückwärts verlängerbar ist, um zusammen mit dem Rücksitz hinter diesem Sitz eine Schreibtisch-Arbeitsplatz-Kombination zu bilden.

Durch den erfindungsgemäßen Vorschlag wird ein voll brauchbarer, schreibtischartiger Arbeitsplatz erhalten. Eine Person, beispielsweise eine Sekretärin, die auf dem Rücksitz hinter dem erfindungsgemäß ausgebildeten Sitz sitzt, erhält auf diese Weise eine Schreibtischfläche, auf der tatsächlich gearbeitet werden kann. Es können Schreibarbeiten erledigt werden. Es wird aber auch eine Unterlage für eine Schreibmaschine, einen Laptop oder eine ähnliche Einrichtung erhalten.

Der erfindungsgemäße Sitz wird in der Regel der Beifahrersitz sein. Es ist klar, daß der erfindungsgemäße Sitz mit seinem Schreibtisch auch vom Fahrersitz aus benutzbar ist, wenn auch klar ist, daß die Benutzungsmöglichkeit aus dieser Stellung heraus wesentlich ungünstiger ist als die Benutzungsmöglichkeit auf dem Rücksitz hinter dem erfindungsgemäßen Sitz.

Die Verlängerung der Tischplatte nach rückwärts kann beispielsweise dadurch erreicht werden, daß die Tischplatte nach rückwärts verschiebbar ist. Dabei kann die ganze Tischplatte verschiebbar sein. Es ist aber auch möglich, die Tischplatte nach rückwärts ausziehbar auszugestalten.

Bei einer Variante der Erfindung ist die Tischplatte nach rückwärts umklappbar, und zwar wenigstens in Teilen.

Günstig ist es, wenn das untere Ende der Rückenlehne mindestens in der umgeklappten Stellung anhebbar ist. Dabei kann z.B. nur das untere Ende der Rückenlehne anhebbar sein, während das obere Ende die sich ergebende Lage in umgeklappter Stellung beibehält. Das Ziel solcher und ähnlicher Maßnahmen besteht dabei darin, einerseits die Tischplatte in eine horizontale Lage zu bringen, andererseits die Tischstellung bezüglich des Rücksitzes zu verbessern.

Günstig ist es in diesem Zusammenhang, wenn das Gelenk zwischen der Rückenlehne und dem Sitzteil anhebbar ist. Die Verbindung des Gelenkes mit dem Sitzteil kann dabei beispielsweise teleskopartig ausgestaltet sein.

Bei einer anderen Ausführungsform der Erfindung ist das Gelenk zwischen der Rückenlehne und dem Sitzteil oberhalb des unteren Endes der Rückenlehne angeordnet, um den Teil der Rückenlehne unterhalb des Gelenkes beim Umklappen nach rückwärts zu schwenken. Auch auf diese Weise läßt sich bereits erreichen, daß die Tischplatte in der umgeklappten Stellung nach rückwärts verlängert ist.

Die umgeklappte Stellung der Rückenlehne zum Zweck der Schaffung einer Schreibtischfläche kann durch verschiedene Maßnahmen gesichert werden. Beispielsweise schlägt hierbei die Erfindung eine Verriegelung für das Gelenk zwischen dem Sitzteil und der Rückenlehne vor. Zusätzlich oder wahlweise hierzu können auch Einrichtungen vorgesehen sein zur Unterstützung des oberen Endes der Rückenlehne in der umgeklappten Stellung. Eine solche Einrichtung kann beispielsweise am Armaturenbrett vorgesehen sein. Diese Einrichtung kann beispielsweise mit der Kopfstütze zusammenwirken. Es ist aber auch möglich, die Kopfstütze derart anzuordnen, daß sie in der umgeklappten Stellung der Rückenlehne am Sitzteil oder auch am Armaturenbrett eine Anlage findet.

In der Zeichnung sind einige Ausführungsbeispiele der Erfindung schematisch dargestellt. Es zeigen:

Fig. 1    eine Seitenansicht eines erfindungsgemäßen Sitzes, wobei sich der Sitz in der normalen Gebrauchsstellung befindet,

Fig. 2 eine Seitenansicht des Sitzes nach der Fig. 1, sowie einen Teil eines zugehörigen Rücksitzes,

Fig. 3 eine Variante zum Ausführungsbeispiel nach der Fig. 2,

Fig. 4 einen anderen Sitz gemäß der Erfindung, und

Fig. 5 ein abgewandeltes Auführungsbeispiel der Erfindung.

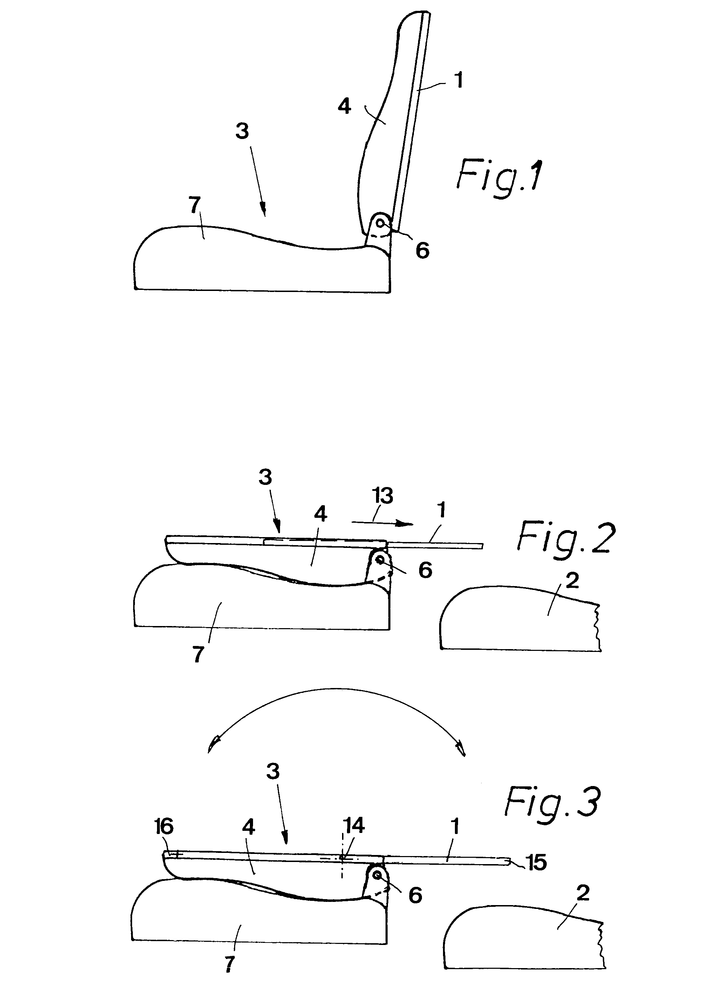

Der Sitz 3 in der Darstellung der Fig. 1 besteht im wesentlichen aus der Rückenlehne 4 und dem Sitzteil 7. Die beiden Teile sind durch das Gelenk 6 miteinander verbunden, um das die Rückenlehne 4 entgegen dem Uhrzeigersinn aus der Sitzstellung in eine im wesentlichen horizontale Stellung verschwenken zu können. An der Rückenlehne 4 ist eine Tischplatte 1 befestigt, die in der Stellung, in der der Tisch nicht gebraucht wird, die in der Fig. 1 gezeigte Stellung einnimmt.

In der umgeklappten Stellung, die in der Fig. 2 gezeigt ist, ist die Tischplatte 1 nach rückwärts in Richtung des Pfeiles herausgezogen. Eine Person, die auf dem hinteren Sitz 2 sitzt, erhält somit eine Tischfläche, die z.B. Schreibarbeiten erlaubt.

Das Ausführungsbeispiel nach der Fig. 3 gleicht im wesentlichen derjenigen nach der Fig. 2, jedoch mit dem Unterschied, daß die Tischplatte 1 in diesem Fall um das Gelenk 14 verschwenkbar ist. Dadurch gelangt die Tischplatte ebenfalls in eine günstige Gebrauchsstellung bezüglich des Rücksitzes 2. Bei Nichtgebrauch kann das Ende 15 der Tischplatte 1 an der Halteeinrichtung 16 arretiert werden, so daß in der Nichtgebrauchsstellung etwa die Stellung nach der Fig. 1 erhalten wird.

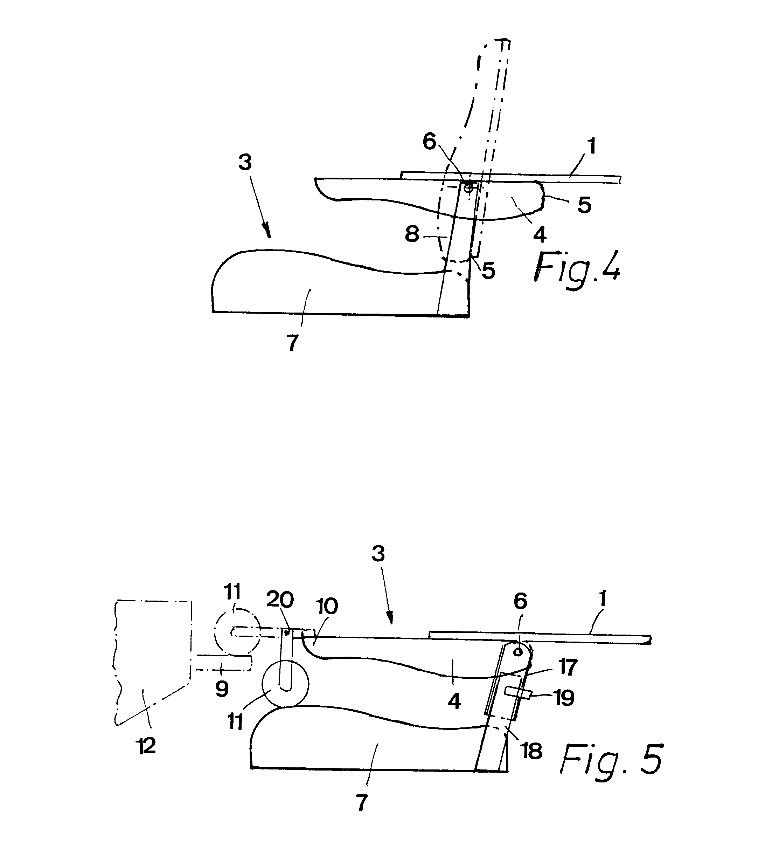

Beim Ausführungsbeispiel nach der Fig. 4 besitzt das Gelenk 6 eine solche Höhenlage bezüglich der Rückenlehne 4, so daß beim Umklappen der Rückenlehne der untere Teil 8 mit dem unteren Ende 5 nach rückwärts geschwenkt wird, so daß schon auf diese Weise die Tischplatte 1 dem hinteren Sitz näher gebracht wird. Darüberhinaus ist es noch möglich, die Tischplatte 1 verschiebbar oder umklappbar auszugestalten, wie dies in den Fig. 1 bis 3 gezeigt ist.

Bei der Variante nach der Fig. 5 ist das Gelenk 6, um das die Rückenlehne 4 verschwenkbar ist, mittels eines Schiebestückes 17 mit einem Führungsstück 18 des Sitzteiles 7 verbunden. Dadurch kann das Gelenk 6 und damit das untere Ende der Rückenlehne 4 angehoben werden. Die angehobene Stellung wird durch einen Riegel 19 zwischen den Teilen 17 und 18 fixiert. Die Tischplatte 1, die wiederum verschiebbar oder umklappbar sein kann, gelangt hierdurch in eine günstige Lage.

Bei der Ausführungsform nach der Fig. 5 empfiehlt es sich, das obere Ende 10 der Rückenlehne 4 zu unterstützen. Hierzu kann die Kopfstütze 11 dienen, die sich beispielsweise am vorderen Ende des Sitzteiles 7 abstützt, wobei sie Zweckmäßig nach vorne um das Gelenk 20 verschwenkbar ist. In einer anderen Stellung der Kopfstütze kann diese an einem Element 9 des Armaturenbretts 12 aufliegen.

**Patentansprüche**

1. Sitz für Kraftfahrzeuge mit einem Sitzteil und einer Rückenlehne, wobei die Rückenlehne nach vorne schwenkbar und an ihrer Rückseite mit einer als Tischplatte dienenden Oberfläche ausgestattet ist, dadurch gekennzeichnet, daß die Tischplatte (1) im umgeklappten Zustand nach rückwärts verlängerbar ist, um zusammen mit dem Rücksitz (2) hinter diesem Sitz (3) eine Schreibtisch-Arbeitsplatz-Kombination zu bilden.

2. Sitz nach Anspruch 1, dadurch gekennzeichnet, daß die Tischplatte (1) nach rückwärts verschiebbar ist.

3. Sitz nach einem oder beiden der vorhergehenden Ansprüche, dadurch gekennzeichnet, daß die Tischplatte (1) nach rückwärts ausziehbar ist.

4. Sitz nach einem oder mehreren der vorhergehenden Ansprüche, dadurch gekennzeichnet, daß die Tischplatte (1) nach rückwärts umklappbar ist.

5. Sitz nach einem oder mehreren der vorhergehenden Ansprüche, dadurch gekennzeichnet, daß das untere Ende (5) der Rückenlehne (4) mindestens in der umgeklappten Stellung anhebbar ist.

6. Sitz nach einem oder mehreren der vorhergehenden Ansprüche, dadurch gekennzeichnet, daß das Gelenk (6) zwischen der Rückenlehne (4) und dem Sitzteil (7) anhebbar ist.

7. Sitz nach einem oder mehreren der vorhergehenden Ansprüche, dadurch gekennzeichnet, daß das Gelenk (6) zwischen der Rückenlehne (4) und dem Sitzteil (7) oberhalb des unteren Endes (5) der Rückenlehne (4) angeordnet ist, um den Teil (8) unterhalb des Gelenkes (6) beim Umklappen nach rückwärts zu schwenken.

8. Sitz nach einem oder mehreren der vorhergehenden Ansprüche, gekennzeichnet durch eine Verriegelung für das Gelenk (6) zwischen dem Sitzteil (7) und der Rückenlehne (4) zur Fixierung in der umgeklappten Stellung.

9. Sitz nach einem oder mehreren der vorhergehenden Ansprüche, gekennzeichnet durch eine Einrichtung (9,11) zur Unterstützung des oberen Endes (10) der Rückenlehne (4) in der umgeklappten Stellung.

10. Sitz nach Anspruch 9, dadurch gekennzeichnet, daß für die Kopfstütze (11) in der umgeklappten Stellung der Rückenlehne (4) am Sitzteil (7) und/oder am Armaturenbrett (12) eine Anlage (Element 9) vorgesehen ist.

Fig.1

Fig.2

Fig.3

Fig.4

Fig. 5